# EUROPÄISCHE PATENTSCHRIFT

(11) **EP 4 370 891 B1**
(45) Veröffentlichungstag und Bekanntmachung des Hinweises auf die Patenterteilung: **01.04.2026**
(21) Anmeldenummer: 22735304.2
(22) Anmeldetag: 20.06.2022
(51) Int. Cl.: G01M 13/026

(54) **VERSPANNUNGSPRÜFSTAND, AUFWEISEND GETRIEBE UND EINEN ELEKTROMOTOR**
GEAR TEST RIG HAVING TRANSMISSIONS AND AN ELECTRIC MOTOR
BANC D'ESSAI D'ENGRENAGE COMPRENANT DES TRANSMISSIONS ET UN MOTEUR ÉLECTRIQUE

(30) Priorität: 16.07.2021 DE 102021003696
(43) Veröffentlichungstag der Anmeldung: 22.05.2024
(73) Patentinhaber: SEW-EURODRIVE GmbH & Co. KG, 76646 Bruchsal (DE)
(72) Erfinder: DOLEJS, Jirí, 253 01 Hostivice (CZ)
(86) Internationale Anmeldenummer: PCT/EP2022/025285
(87) Internationale Veröffentlichungsnummer: WO 2023/284997

(56) Entgegenhaltungen:
- DE-A1- 102015 221 683
- DE-A1- 2 948 517

## Beschreibung

Die Erfindung betrifft einen Verspannungsprüfstand, aufweisend Getriebe und einen Elektromotor.

Aus der DE 10 2006 014 237 B4 ist ein Verspannungsprüfstand bekannt.

Aus der DE 29 48 517 A1 ist eine Vorrichtung zur direkten Messung der Verlustleistung von Zahnradgetrieben bekannt.

Aus der DE 10 2006 014 237 B4 ist ein Verspannungsprüfstand bekannt.

Aus der US 3 112 643 A ist ebenfalls eine Prüfmaschine bekannt.

Aus der DE 35 45 335 A1 ist eine Einrichtung zur Erprobung angetriebener Radachsen für Kraftfahrzeuge bekannt.

Aus der DD 66 298 A1 ist eine Einrichtung zur stufenlosen Einstellung der Vorlast von mechanischen Übertragungselementen währen des im Energiekreislaufverfahren erfolgenden Prüfstandes bekannt.

**Aus der** DE 10 2015 221683 A1 **ist als nächstliegender Stand der Technik ein Verspannungsprüfstand bekannt.**

**Aus der** DE 29 48 517 A1 **ist ein Verfahren zur direkten Messung der Verlustleistung von Zahnradgetrieben bekannt.**

Der Erfindung liegt daher die Aufgabe zugrunde, einen Prüfstand einfach und präzise betreibbar weiterzubilden.

Erfindungsgemäß wird die Aufgabe bei dem Verspannungsprüfstand nach den in Anspruch 1 angegebenen Merkmalen gelöst.

Wichtige Merkmale der Erfindung bei dem Verspannungsprüfstand, aufweisend Getriebe und einen Elektromotor, sind, dass jedes Getriebe eine erste, insbesondere eintreibende, Welle aufweist und eine zweite, insbesondere abtreibende, Welle aufweist,
wobei eine Verbindungswelle, insbesondere Torsionswelle, zwei der ersten Wellen miteinander drehfest verbindet, insbesondere wobei zwischen der Verbindungswelle und der jeweiligen ersten Welle eine jeweilige Kupplung angeordnet ist,
wobei zwei der zweiten Wellen über zumindest eine Vorspanneinheit verbunden sind.

Von Vorteil ist dabei, dass mittels der Vorspanneinheit eine Verspannung in den als geschlossene Schleife ausgeführten Drehmomentenkreislauf in einfacher Weise einbringbar ist. Vorzugsweise wird im Stillstand der Getriebe die Vorspanneinheit mit einem Werkzeug betätigt und dadurch die Verspannung eingebracht. Außerdem ist die Verbindungswelle mit derart kleinem Querschnitt ausgeführt, dass die Torsion sogar mit bloßem Auge erkennbar ist. Auf diese Weise ist ein Einstellen der gewünschten Torsion in einfacher Weise ausführbar. Alternativ ist aber auch ein Sensor zur Erfassung der Verspannung einsetzbar, so dass auch mit dem bloßen Auge nicht erkennbare Verdrehungen der Verbindungswelle detektierbar und anzeigbar sind.

Die Erfindung ist auch mit einer höheren Anzahl von Getrieben ausführbar, wenn die eintreibenden und abtreibenden Wellen derart verbunden sind, dass das Drehmoment in einem geschlossenen Kreislauf strömt.

**Erfindungsgemäß** überragt eine Hohlwelle, insbesondere Messwelle, die Verbindungswelle ganz oder zumindest teilweise in axialer Richtung, insbesondere also in Richtung der Drehachse der Verbindungswelle,
wobei die Hohlwelle, insbesondere an ihrem ersten axialen Endbereich, mit der Verbindungswelle oder mit einer der ersten Wellen drehfest verbunden ist, insbesondere schweißverbunden ist. Von Vorteil ist dabei, dass die Verdrehung der Verbindungswelle relativ zur Hohlwelle leicht erkennbar ist. Denn am ersten Ende der Hohlwelle ist die Hohlwelle direkt oder indirekt mit der Verbindungswelle drehfest verbunden, am anderen Ende der Hohlwelle ist die Hohlwelle aber nicht verbunden mit der Verbindungswelle, obwohl das axiale Ende der Hohlwelle und das axiale Ende der Verbindungswelle sehr nahe zueinander angeordnet sind.

**Erfindungsgemäß** ist eine Triebscheibe der Vorspanneinheit drehfest, insbesondere über eine Passfeder, mit einer ersten der zweiten Wellen verbunden,
wobei die andere der zweiten Wellen mit einer Zwischenwelle drehfest verbunden ist, die drehfest mit einer Hülse, insbesondere Vorspannhülse, verbunden ist, mit welcher ein Schneckenrad drehfest verbunden ist,
wobei in der Triebscheibe aufgenommen und/oder drehbar gelagerte Schnecken im Eingriff stehen mit der Verzahnung des Schneckenrads. Von Vorteil ist dabei, dass die Triebscheibe zur Zwischenwelle relativ verdrehbar ist, indem die Schnecken entsprechend gedreht werden. Denn durch das Drehen der Schnecken wird die Verspannung in die geschlossene Schleife des Prüfstandes sicher und einfach eingebracht. Der Wert der tatsächlich in den geschlossenen Drehmomentenkreislauf eingebrachten Verspannung wird mittels der Sensoren ablesbar.

Bei einer vorteilhaften Ausgestaltung ist das aus einer jeweiligen Schnecke mit dem Schneckenrad gebildete Schneckengetriebe selbsthemmend ausgeführt, insbesondere wobei der Steigungswinkel der Verzahnung der Schnecke derart gering ist, dass die Schnecke zum Schneckenrad selbsthemmen wirkt. Von Vorteil ist dabei, dass die eingestellte Verspannung im Drehmomentenkreislauf bleibt und sich nicht von selbst abbaut.

Bei einer vorteilhaften Ausgestaltung sind die beiden Schnecken zueinander parallel ausgerichtet. Von Vorteil ist dabei, dass die beiden Schnecken mit derartigen Steigungswinkel ausführbar sind, dass das Schneckenrad in beiden Drehrichtungen selbsthemmend blockiert ist.

Bei einer vorteilhaften Ausgestaltung ist das Schneckenrad mittels axial gerichteter Schrauben, insbesondere also mittels Schrauben, deren Schraubenachse parallel zur Drehachse der Zwischenwelle ausgerichtet, mit der Hülse verbunden ist, wobei die Schrauben in Gewindebohrungen der Hülse zumindest teilweise eingeschraubt sind. Von Vorteil ist dabei, dass eine einfache kostengünstige Befestigung ausführbar ist. Außerdem ist das Schneckenrad aus einem anderen Material wie die Hülse ausführbar ist. Insbesondere ist das Schneckenrad aus einem weicheren Material, insbesondere Bronze, ausführbar als die Hülse, insbesondere wobei die Hülse aus Stahl ausführbar ist.

Bei einer vorteilhaften Ausgestaltung ist die Hülse auf die Zwischenwelle aufgesteckt. Von Vorteil ist dabei, dass eine einfache kostengünstige zentrierte Verbindung zwischen Hülse und Zwischenwelle ausführbar ist. Zur Drehmomentdurchleitung ist eine Passfederverbindung ausführbar.

Bei einer vorteilhaften Ausgestaltung sind die Schnecken mit einem von der äußeren Umgebung der Triebscheibe herkommenden Werkzeug betätigbar. Von Vorteil ist dabei, dass im Stillstand der Getriebe die gewünschte Verspannung einstellbar ist.

Bei einer vorteilhaften Ausgestaltung ist die jeweilige Schnecke in einer jeweiligen durchgehenden Bohrung der Triebscheibe aufgenommen und mittels in den Bohrungen aufgenommenen Lagerungen drehbar gelagert ist. Von Vorteil ist dabei, dass eine einfache drehbare Lagerung und Positionierung der Schnecken ermöglicht ist. Vorzugswiese wird die jeweilige Schnecke zwischen zwei Lagerbuchse aufgenommen, die in die jeweilige Bohrung gesteckt werden. Somit ist die jeweilige Schnecke innerhalb der jeweiligen Bohrung angeordnet und somit aufgenommen. Die Lagerbuchsen sind an der Bohrung zentriert und lagern die jeweilige Schnecke drehbar.

**Erfindungsgemäß** ist die Hülse in eine Lagerbuchse eingesteckt,
wobei die Lagerbuchse als Gleitlager für die Hülse fungiert,
wobei die Lagerbuchse einen radial hervorragenden Kragen aufweist, der mit der Triebscheibe mittels Schrauben verbunden ist. Von Vorteil ist dabei, dass die Hülse mittels der Lagerbuchse auch zentrierbar und lagerbar ist, wobei die Lagerbuchse von den Schnecken drehbar ist und dabei von der Lagerbuchse gelagert wird. Allerdings ist die Drehbewegung nur geringfügig und somit kommt es hierbei nicht auf die Verlustleistungen an, die **bei** der Drehbewegung entstehen.

Bei einer vorteilhaften Ausgestaltung wird die Triebscheibe über einen von dem Elektromotor angetriebenen Riemen in Drehbewegung versetzt. Von Vorteil ist dabei, dass die Getriebe antreibbar sind, so dass die Auswirkungen der Verspannung auch bei Betrieb der Getriebe drehzahlabhängig beobachtbar sind.

Bei einer vorteilhaften Ausgestaltung sind die Getriebe Parallelwellengetriebe. Von Vorteil ist dabei, dass sogar mit nur zwei Getrieben der Prüfstand realisierbar ist.

Bei einer alternativen vorteilhaften Ausgestaltung sind die Getriebe Winkelgetriebe, insbesondere wobei die jeweilige eintreibende Welle mit einem jeweiligen Kegelritzel des jeweiligen Getriebes drehfest verbunden ist, das im Eingriff mit einem Kegelrad des jeweiligen Getriebes steht, welches drehfest mit einer jeweiligen Zwischenwelle des jeweiligen Getriebes verbunden ist, wobei ein drehfest mit der Zwischenwelle des jeweiligen Getriebes verbundenes Zahnrad des jeweiligen Getriebes mit einem mit der abtreibenden Welle des jeweiligen Getriebes drehfest verbundenen Zahnrad des jeweiligen Getriebes im Eingriff ist. Von Vorteil ist dabei, dass vorzugsweise vier Getriebe im Prüfstand verwendbar sind und somit die geschlossene Schleife aus den Getrieben bildbar ist.

Bei einer vorteilhaften Ausgestaltung ist die relative Verdrehung der Hohlwelle, insbesondere Messwelle, zur Verbindungswelle optisch erkennbar oder mittels eines längenveränderungssensitiven Sensors detektierbar. Von Vorteil ist dabei, dass eine präzise Einstellung der Verspannung ausführbar ist.

Weitere Vorteile ergeben sich aus den Unteransprüchen.

Die Erfindung wird nun anhand von schematischen Abbildungen näher erläutert:

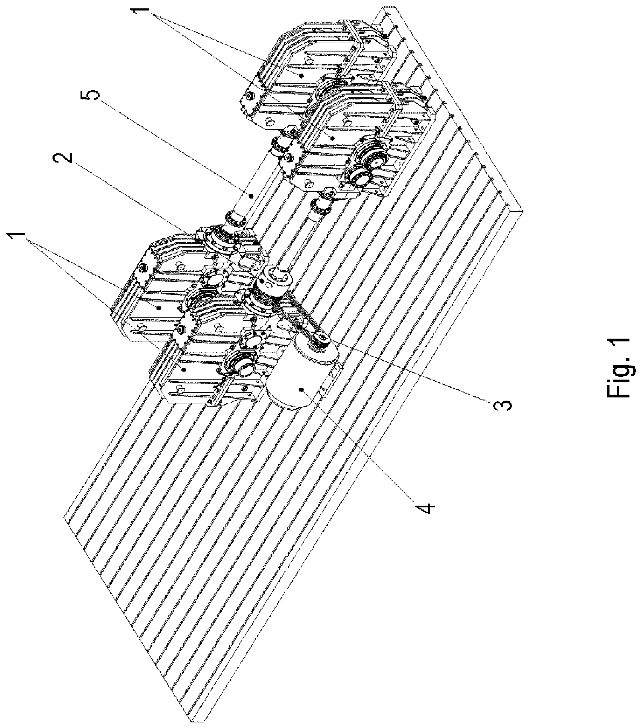

In der Figur 1 ist eine Schrägansicht des erfindungsgemäßen Verspannungsprüfstandes dargestellt.

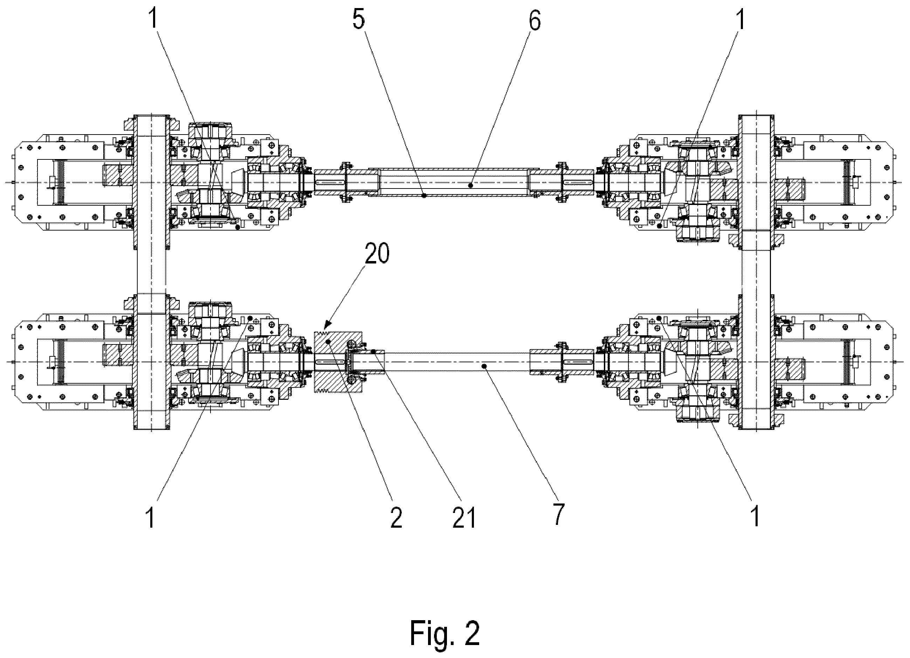

In der Figur 2 ist eine Schnittansicht des Verspannungsprüfstandes dargestellt.
In der Figur 3 ist eine Vorspanneinheit des Verspannungsprüfstandes in Schnittansicht dargestellt.
In der Figur 4 ist die Vorspanneinheit mit ihren wesentlichen Teilen explodiert dargestellt.

Wie in den Figuren dargestellt, sind die abtreibenden Wellen zweier erster Getriebe 1 drehfest miteinander verbunden und die abtreibenden Wellen zweier zweiter Getriebe 1 ebenfalls drehfest miteinander verbunden.

Außerdem ist die eintreibende Welle eines ersten der beiden ersten Getriebe 1 drehfest mit der eintreibenden Welle eines ersten der beiden zweiten Getriebe mittels einer Verbindungswelle 6 verbunden, wobei die Verbindungswelle 6 mit diesen beiden eintreibenden Wellen drehfest verbunden ist und eine als Hohlwelle ausgeführte Messwelle 5 mit nur einer der eintreibenden Wellen drehfest verbunden ist. Dabei ragt aber die Messwelle 5 in axialer Richtung über die Verbindungswelle 6 hervor, so dass die auf die Verbindungswelle einwirkende Torsion als Drehabweichung, insbesondere Umfangswinkelabstand, zwischen einem Ende der Messwelle 5 und der abtreibenden Welle des anderen Getriebes verbunden ist.

Die eintreibende Welle des zweiten der beiden ersten Getriebe 1 drehfest mit der eintreibenden Welle des zweiten der beiden zweiten Getriebe 1 über eine Vorspanneinheit verbunden. Hierzu ist eine Vorspannhülse 21 der Vorspanneinheit drehfest mit einer der eintreibenden Wellen verbunden, insbesondere über eine Zwischenwelle 7, und andererseits eine Triebscheibe 2 mit der anderen eintreibenden Welle.

Vorzugsweise ist die Vorspannhülse 21 auf die Zwischenwelle 7 aufgesteckt und mittels Passfederverbindung verbunden.

Ein Schneckenrad 30 ist mit der Vorspannhülse 21 drehfest verbunden, wobei das Schneckenrad 30 mit der Vorspannhülse 21 koaxial ausgerichtet ist.

Am radial äußeren Umfang ist die Vorspannhülse 21 vorzugsweise zylindrisch ausgeführt, weist also einen Zylindermantel als radial äußere Oberfläche auf.

Zwei in der Triebscheibe 2, insbesondere in durch die Triebscheibe durchgehenden Bohrungen aufgenommene, drehbar gelagerte Schnecken 31, insbesondere deren Drehachsen, sind jeweils tangential zum Schneckenrad 30 ausgerichtet und im Eingriff mit der Verzahnung des Schneckenrads 30.

Die Schnecken 31 sind dabei derart ausgerichtet, dass das Schneckenrad 30 von den Schnecken 31 selbsthemmend gehalten ist. Vorzugsweise sind die Schnecken 31 zueinander parallel ausgerichtet, insbesondere also am Schneckenrad 30 diametral einander gegenüberliegend angeordnet. Die Steigungswinkel der Schnecken sind entsprechend dimensioniert.

Mittels der Vorspanneinheit ist also eine Verspannung einbringbar, ohne dass ein längenveränderliches Element notwendig ist. Die axialen Längen der Wellen sind also unveränderlich. Durch Drehen der Schnecken 31 mittels eines Werkzeugs, insbesondere während Stillstand der Getriebe, wird das Schneckenrad 30 entsprechend relativ zur Triebscheibe 2 gedreht und somit die Verspannung in die Getriebeanordnung eingebracht. Die Getriebeanordnung führt das Drehmoment in einer geschlossenen Schleife.

Dadurch, dass die Messwelle 5 beabstandet ist von der Vorspanneinheit ist eine verbesserte Erfassung der Verspannung, insbesondere Torsion, ausführbar. Insbesondere ist das jeweils zwischen den Verzahnungsteilen der Getriebe vorhandene Spiel eliminiert und die Elastizität verschiedener Komponenten berücksichtigt.

Die relative Verdrehung der Messwelle 5 zur Verbindungswelle 6 ist nicht nur optisch ablesbar, sondern auch durch Dehnungsmessstreifen detektierbar, die zwischen der Messwelle 5 und der Verbindungswelle 6 angebracht werden. Statt der Dehnungsmessstreifen ist auch ein Piezo-Sensor verwendbar oder ein anderer längenveränderungssensitiver Sensor.

Das optische Ablesen ist ohne weiteren Aufwand auch bei drehenden Wellen ausführbar. Die Sensorsignale müssen jedoch mittels elektromagnetischer Wellen, insbesondere Funkwellen, Infrarotwellen oder Lichtwellen, übertragen werden an eine stationäre Einheit, die mit einem Anzeigemittel verbunden ist.

Zwischen den miteinander drehfest zu verbindenden Wellen, insbesondere abtreibenden oder eintreibenden Wellen, sind Kupplungen anordenbar.

Ein Elektromotor 4 treibt einen Riemen, insbesondere Vielkeilriemen, an der mit der Triebscheibe 2 kraftschlüssig verbunden ist, insbesondere wobei der Vielkeilriemen in eine Verzahnung 20 der Triebscheibe 2 eingreift, so dass eine formschlüssige Sicherung in axialer Richtung bewirkt ist.

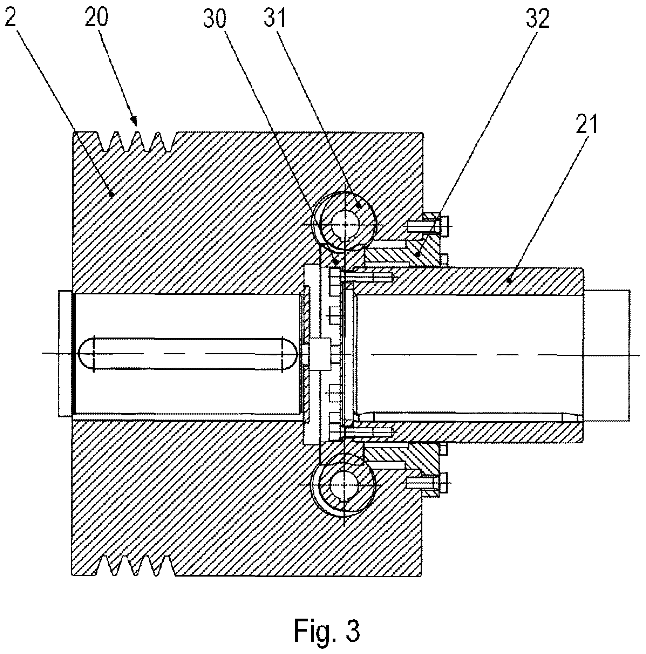

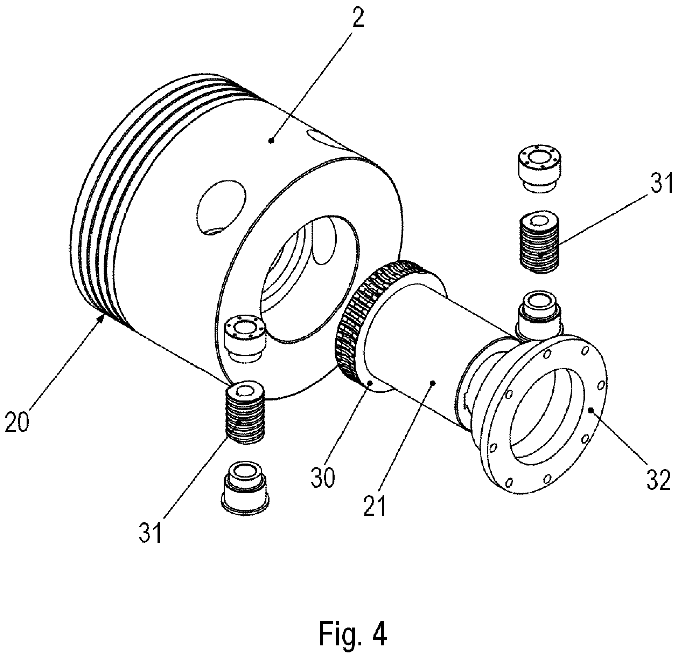

Wie in Figur 3 und 4 erkennbar, ist die Hülse 21 auf eine Lagerbuchse 32 aufgeschoben, die sodann als Gleitlager fungiert. Die Lagerbuchse 32 ist mittels Schrauben, welche durch einen radial hervorragenden Kragen der Lagerbuchse 32 hindurchgehen, mit der Triebscheibe 2 verbunden. Dabei sind die Schrauben in in der Figur 4 nicht dargestellte Gewindebohrungen der Triebscheibe 2 eingeschraubt.

Insbesondere ist eine Zwischenwelle 7 mittels Passfederverbindung mit der als Vorspannhülse 21 ausgeführten Buchse drehfest verbunden. Die Zwischenwelle ist mittels einer Kupplung drehfest mit der abtreibenden Welle eines Getriebes 1 verbunden.

Bei weiteren erfindungsgemäßen Ausführungsbeispielen werden die abtreibenden mit den eintreibenden Wellen vertauscht. Dies ist auch durch Drehrichtungsumkehr erreichbar.

Bei weiteren erfindungsgemäßen Ausführungsbeispielen werden statt der vier Winkelgetriebe nur zwei Parallelwellengetriebe verwendet, wobei dann die beiden eintreibenden Wellen der beiden Parallelwellengetriebe über die Verbindungswelle 6, welche überragt wird von der mit einer der eintreibenden Wellen drehfest verbundenen Messwelle 5, drehfest miteinander verbunden sind und die beiden abtreibenden Wellen über zumindest die zwischengeordnete Vorspanneinheit. Dabei ist die Triebscheibe 2 wiederum drehfest verbunden mit einer ersten der beiden abtreibenden Wellen der beiden Getriebe. Das Schneckenrad 30 ist wiederum über die Vorspannhülse 21 drehfest über eine Zwischenwelle oder direkt mit der anderen abtreibenden Welle verbunden.

Alternativ werden die abtreibenden mit den eintreibenden Wellen vertauscht. Dies ist auch durch Drehrichtungsumkehr erreichbar.

Bei weiteren erfindungsgemäßen Ausführungsbeispielen ist zwischen zwei der drehfest miteinander zu verbindenden Wellen eine Zwischenwelle angeordnet.

Bei weiteren erfindungsgemäßen Ausführungsbeispielen ist das Schneckenrad 30 als Zahnkranz ausgeführt und auf die Vorspannhülse 31 aufgesteckt.

Bei weiteren erfindungsgemäßen Ausführungsbeispielen ist das Schneckenrad 30 mit der Vorspannhülse 21 einstückig, also einteilig ausgebildet.

### Bezugszeichenliste

1 Getriebe
2 Triebscheibe
3 Riemen
4 Elektromotor
5 Messwelle
6 Verbindungswelle
7 Zwischenwelle
20 Verzahnung
21 Vorspannhülse
30 Schneckenrad
31 Schnecke
32 Lagerbuchse

## Patentansprüche

1. Verspannungsprüfstand, aufweisend Getriebe (1) und einen Elektromotor (4),
wobei jedes Getriebe (1) eine erste, insbesondere eintreibende, Welle aufweist und eine zweite, insbesondere abtreibende, Welle aufweist,
**wobei** eine Verbindungswelle (6), insbesondere Torsionswelle, zwei der ersten Wellen miteinander drehfest verbindet, insbesondere wobei zwischen der Verbindungswelle und der jeweiligen ersten Welle eine jeweilige Kupplung angeordnet ist,
wobei zwei der zweiten Wellen über zumindest eine Vorspanneinheit verbunden sind,
wobei **eine** Hohlwelle (5), **insbesondere Messwelle, die Verbindungswelle ganz oder zumindest teilweise in axialer Richtung, insbesondere also in Richtung der Drehachse der Verbindungswelle, überragt,**
**wobei die** Hohlwelle (5), **insbesondere an ihrem ersten axialen Endbereich, mit der Verbindungswelle** (6) **oder mit einer der ersten Wellen drehfest verbunden** ist, **insbesondere schweißverbunden ist,**
wobei **eine Triebscheibe** (2) **der Vorspanneinheit drehfest, insbesondere über eine Passfeder, mit einer ersten der zweiten Wellen verbunden ist,**
**wobei die andere der zweiten Wellen mit einer Zwischenwelle** (7) **drehfest verbunden ist, die drehfest mit einer** Hülse (21),
**insbesondere Vorspannhülse, verbunden ist,**
**dadurch gekennzeichnet, dass**
mit der Hülse (21) **ein Schneckenrad** (30) **drehfest verbunden ist,**
**wobei in der Triebscheibe** (2) **aufgenommen und/oder drehbar gelagerte Schnecken** (31) im **Eingriff stehen mit** einer **Verzahnung des** Schneckenrads (30),
**wobei die Hülse** (21) **in eine Lagerbuchse** (32) **eingesteckt ist,**
**wobei die Lagerbuchse** (32) **als Gleitlager für die Hülse** (21) **fungiert,**
**wobei die Lagerbuchse** (32) **einen radial hervorragenden Kragen aufweist, der mit der Triebscheibe** (2) **mittels Schrauben verbunden ist.**

2. **Verspannungsprüfstand nach Anspruch 1,**
**dadurch gekennzeichnet, dass**
das aus einer jeweiligen Schnecke (31) mit dem Schneckenrad (30) gebildete Schneckengetriebe selbsthemmend ausgeführt ist, insbesondere wobei der Steigungswinkel der Verzahnung der Schnecke derart gering ist, dass die Schnecke zum Schneckenrad selbsthemmen wirkt.

3. Verspannungsprüfstand nach einem der vorangegangenen Ansprüche,
**dadurch gekennzeichnet, dass**
die beiden Schnecken (31) zueinander parallel ausgerichtet sind.

4. Verspannungsprüfstand nach einem der vorangegangenen Ansprüche,
**dadurch gekennzeichnet, dass**
das Schneckenrad (30) mittels axial gerichteter Schrauben, insbesondere also mittels Schrauben, deren Schraubenachse parallel zur Drehachse der Zwischenwelle ausgerichtet ist, mit der Hülse verbunden ist, wobei die Schrauben in Gewindebohrungen der Hülse zumindest teilweise eingeschraubt sind.

5. Verspannungsprüfstand nach einem der vorangegangenen Ansprüche,
**dadurch gekennzeichnet, dass**
die Hülse (21) auf die Zwischenwelle aufgesteckt ist.

6. Verspannungsprüfstand nach einem der vorangegangenen Ansprüche,
**dadurch gekennzeichnet, dass**
die Schnecken (31) mit einem von der äußeren Umgebung der Triebscheibe (2) herkommenden Werkzeug betätigbar sind.

7. Verspannungsprüfstand nach einem der vorangegangenen Ansprüche,
**dadurch gekennzeichnet, dass**
die jeweilige Schnecke (31) in einer jeweiligen durchgehenden Bohrung der Triebscheibe aufgenommen und mittels in den Bohrungen aufgenommenen Lagerungen drehbar gelagert ist.

8. Verspannungsprüfstand nach einem der vorangegangenen Ansprüche,
**dadurch gekennzeichnet, dass**
die Triebscheibe (2) über einen von dem Elektromotor (4) angetriebenen Riemen in Drehbewegung versetzt wird.

9. Verspannungsprüfstand nach einem der vorangegangenen Ansprüche,
**dadurch gekennzeichnet, dass**
die Getriebe Parallelwellengetriebe sind.

10. Verspannungsprüfstand nach einem der Ansprüche 1 bis 9,
**dadurch gekennzeichnet, dass**
die Getriebe Winkelgetriebe sind,
insbesondere wobei die jeweilige eintreibende Welle mit einem jeweiligen Kegelritzel des jeweiligen Getriebes drehfest verbunden ist, das im Eingriff mit einem Kegelrad des jeweiligen Getriebes steht, welches drehfest mit einer jeweiligen Zwischenwelle des jeweiligen Getriebes verbunden ist, wobei ein drehfest mit der Zwischenwelle des jeweiligen Getriebes verbundenes Zahnrad des jeweiligen Getriebes mit einem mit der abtreibenden Welle des jeweiligen Getriebes drehfest verbundenen Zahnrad des jeweiligen Getriebes im Eingriff ist.

11. Verspannungsprüfstand nach einem der vorangegangenen Ansprüche,
**dadurch gekennzeichnet, dass**
die relative Verdrehung der Hohlwelle, insbesondere Messwelle, zur Verbindungswelle optisch erkennbar ist oder mittels eines längenveränderungssensitiven Sensors detektierbar ist.

## Claims

1. A tension test rig, having gear units (1) and an electric motor (4),
wherein each gear unit (1) has a first, in particular input, shaft and has a second, in particular output, shaft,
wherein a connecting shaft (6), in particular torsion shaft, non-rotatably connects together two of the first shafts, in particular wherein a respective coupling is arranged between the connecting shaft and the respective first shaft,
wherein two of the second shafts are connected by way of at least one pre-tensioning unit,
wherein a hollow shaft (5), in particular measuring shaft, protrudes beyond the connecting shaft entirely or at least partially in the axial direction, in particular therefore in the direction of the axis of rotation of the connecting shaft,
wherein the hollow shaft (5), in particular at its first axial end region, is connected non-rotatably, in particular connected by welding, to the connecting shaft (6) or to one of the first shafts,
wherein a driving pulley (2) of the pre-tensioning unit is connected non-rotatably, in particular by way of a feather key, to a first of the second shafts,
wherein the other of the second shafts is connected non-rotatably to an intermediate shaft (7) which is connected non-rotatably to a sleeve (21), in particular pre-tensioning sleeve,
**characterised in that**
a worm wheel (30) is connected non-rotatably to the sleeve (21),
with worms (31) received and/or rotatably mounted in the driving pulley (2) meshing with gearing of the worm wheel (30),
with the sleeve (21) being inserted into a bearing bush (32),
with the bearing bush (32) acting as a plain bearing for the sleeve (21),
with the bearing bush (32) having a radially protruding collar which is connected to the driving pulley (2) by means of screws.

2. A tension test rig according to claim 1,
**characterised in that**
the worm gear formed of a respective worm (31) with the worm wheel (30) is designed to be self-locking, in particular with the helix angle of the gearing of the worm being so small that the worm acts in a self-locking manner in relation to the worm wheel.

3. A tension test rig according to one of the preceding claims,
**characterised in that**
the two worms (31) are oriented parallel to one another.

4. A tension test rig according to one of the preceding claims,
**characterised in that**
the worm wheel (30), by means of axially directed screws, in particular therefore by means of screws, the helix axis of which is oriented parallel to the axis of rotation of the intermediate shaft, is connected to the sleeve, with the screws being at least partially screwed into threaded bores in the sleeve.

5. A tension test rig according to one of the preceding claims,
**characterised in that**
the sleeve (21) is mounted on the intermediate shaft.

6. A tension test rig according to one of the preceding claims,
**characterised in that**
the worms (31) can be actuated with a tool coming from the external surroundings of the driving pulley (2).

7. A tension test rig according to one of the preceding claims,
**characterised in that**
the respective worm (31) is received in a respective uninterrupted bore in the driving pulley and is rotatably mounted by means of bearing arrangements received in the bores.

8. A tension test rig according to one of the preceding claims,
**characterised in that**
the driving pulley (2) is set in rotary motion by way of a belt driven by the electric motor (4).

9. A tension test rig according to one of the preceding claims,
**characterised in that**
the gear units are parallel-shaft gear units.

10. A tension test rig according to one of claims 1 to 9,
**characterised in that**
the gear units are right-angled gear units,
in particular with the respective input shaft being connected non-rotatably to a respective bevel pinion of the respective gear unit which meshes with a bevel gear of the respective gear unit which is connected non-rotatably to a respective intermediate shaft of the respective gear unit, with a gear wheel of the respective gear unit which is connected non-rotatably to the intermediate shaft of the respective gear unit meshing with a gear wheel of the respective gear unit which is connected non-rotatably to the output shaft of the respective gear unit.

11. A tension test rig according to one of the preceding claims,
**characterised in that**
the relative turning of the hollow shaft, in particular measuring shaft, in relation to the connecting shaft can be optically recognised or can be detected by means of a sensor which is sensitive to changes in length.

## Revendications

1. Banc d'essai de tension, comprenant une transmission (1) et un moteur électrique (4),
chaque transmission (1) présentant un premier arbre, en particulier un arbre d'entrée, et un second arbre, en particulier un arbre de sortie,
un arbre de liaison (6), en particulier un arbre de torsion, reliant de manière solidaire en rotation deux des premiers arbres, un accouplement respectif étant en particulier agencé entre l'arbre de liaison et le premier arbre respectif,
deux des seconds arbres étant reliés par l'intermédiaire d'au moins une unité de précontrainte,
un arbre creux (5), en particulier un arbre de mesure, dépassant complètement ou au moins partiellement l'arbre de liaison dans la direction axiale, en particulier en direction de l'axe de rotation de l'arbre de liaison,
l'arbre creux (5) étant relié de manière solidaire en rotation, en particulier relié par soudage, en particulier au niveau de sa première région d'extrémité axiale, à l'arbre de liaison (6) ou à un des premiers arbres,
une poulie d'entraînement (2) de l'unité de précontrainte étant reliée de manière solidaire en rotation, en particulier par l'intermédiaire d'une clavette, à un premier des seconds arbres,
l'autre des seconds arbres étant relié de manière solidaire en rotation à un arbre intermédiaire (7) qui est relié de manière solidaire en rotation à un manchon (21), en particulier à un manchon de précontrainte,
**caractérisé en ce que**
une roue à vis sans fin (30) est reliée de manière solidaire en rotation au manchon (21),
des vis sans fin (31) logées et/ou montées rotatives dans la poulie d'entraînement (2) sont en prise avec une denture de la roue à vis sans fin (30),
le manchon (21) étant enfiché dans une douille de palier (32),
la douille de palier (32) servant de palier lisse pour le manchon (21),
la douille de palier (32) présentant une collerette radialement saillante qui est reliée à la poulie d'entraînement (2) au moyen de vis.

2. Banc d'essai de tension selon la revendication 1,
**caractérisé en ce que**
la transmission à vis sans fin formée à partir d'une vis sans fin (31) respective de la roue à vis sans fin (30) est conçue de manière autobloquante, l'angle d'inclinaison de la denture de la vis sans fin étant en particulier suffisamment faible pour que la vis sans fin agisse de manière autobloquante par rapport à la roue à vis sans fin.

3. Banc d'essai de tension selon l'une quelconque des revendications précédentes,
**caractérisé en ce que**
les deux vis sans fin (31) sont orientées parallèlement l'une à l'autre.

4. Banc d'essai de tension selon l'une quelconque des revendications précédentes,
**caractérisé en ce que**
la roue à vis sans fin (30) est reliée au manchon au moyen de vis orientées axialement, en particulier également au moyen de vis dont l'axe de vis est orienté parallèlement à l'axe de rotation de l'arbre intermédiaire, les vis étant au moins partiellement vissées dans des alésages filetés du manchon.

5. Banc d'essai de tension selon l'une quelconque des revendications précédentes,
**caractérisé en ce que**
le manchon (21) est enfiché sur l'arbre intermédiaire.

6. Banc d'essai de tension selon l'une quelconque des revendications précédentes,
**caractérisé en ce que**
les vis sans fin (31) peuvent être actionnées avec un outil provenant de l'environnement extérieur de la poulie d'entraînement (2).

7. Banc d'essai de tension selon l'une quelconque des revendications précédentes,
**caractérisé en ce que**
la vis sans fin (31) respective est logée dans un alésage traversant respectif de la poulie d'entraînement et est montée rotative au moyen de paliers logés dans les alésages.

8. Banc d'essai de tension selon l'une quelconque des revendications précédentes, **caractérisé en ce que**
la poulie d'entraînement (2) est entraînée en rotation par une courroie entraînée par le moteur électrique (4).

9. Banc d'essai de tension selon l'une quelconque des revendications précédentes, **caractérisé en ce que**
les transmissions sont des transmissions à arbre parallèle.

10. Banc d'essai de tension selon l'une quelconque des revendications 1 à 9,
**caractérisé en ce que**
les transmissions sont des transmissions angulaires,
l'arbre d'entrée respectif étant relié de manière solidaire en rotation à un pignon conique respectif de la transmission respective qui est en prise avec un pignon conique de la transmission respective qui est relié de manière solidaire en rotation à un arbre intermédiaire respectif de la transmission respective, un roue dentée de la transmission respective reliée de manière solidaire en rotation à l'arbre intermédiaire de la transmission respective étant en prise avec une roue dentée de la transmission respective reliée de manière solidaire en rotation à l'arbre de sortie de la transmission respective.

11. Banc d'essai de tension selon l'une quelconque des revendications précédentes, **caractérisé en ce que**
la rotation relative de l'arbre creux, en particulier de l'arbre de mesure, par rapport à l'arbre de liaison peut être perçue de manière optique ou peut être détectée au moyen d'un capteur sensible aux variations de longueur.
